# NEUE EUROPÄISCHE PATENTSCHRIFT

(11) **EP 1 946 896 B2**
(45) Veröffentlichungstag und Bekanntmachung des Hinweises auf die Entscheidung über den Einspruch: **14.03.2018**
(45) Hinweis auf die Patenterteilung: 17.08.2011
(21) Anmeldenummer: 07025239.0
(22) Anmeldetag: 29.12.2007
(51) Int. Cl.: B25J 9/16

(54) **Verfahren zum Justieren wenigstens einer Achse**
Method for adjusting at least one axle
Procédé destinés à l'ajustement d'au moins un axe

(30) Priorität: 09.01.2007 DE 102007001395
(43) Veröffentlichungstag der Anmeldung: 23.07.2008
(73) Patentinhaber: KUKA Roboter GmbH, 86165 Augsburg (DE)
(72) Erfinder: Hietmann, Gerhard, 86405 Herbertshofen (DE); Weiss, Martin, 86459 Margertshausen (DE); Bischoff, Rainer, 86163 Augsburg (DE)
(74) Vertreter: Ege Lee & Partner Patentanwälte PartGmbB

(56) Entgegenhaltungen:
- EP-A1- 0 166 002
- DE-A1- 19 924 511
- US-A- 4 474 047

## Beschreibung

Die Erfindung betrifft ein Verfahren zum Justieren wenigstens einer Achse eines Roboters, wobei über die Achse zumindest zwei Bauteile ausgehend von einer durch eine Urjustage bestimmten Justageposition gegeneinander bewegbar sind.

Aus der Praxis sind Verfahren zum Justieren wenigstens einer Achse eines Roboters mit einer Steuereinheit zum Ansteuern der Achse bekannt. Über die Achse werden zumindest zwei Bauteile ausgehend von einer durch eine Urjustage bestimmen Justageposition gegeneinander bewegt. Zum Wiederherstellen verloren gegangener Justageinformationen wird nach einem bekannten Verfahren über bei der Produktion hochpräzise gesetzte Justagepatronen an einem von zwei über die Achse gegeneinander beweglichen Bauteilen ein Justageklotz befestigt. An dem jeweils anderen beweglichen Bauteil wird ein Sensor befestigt: Der Sensor, der als Tastsensor oder elektromagnetischer Sensor ausgebildet sein kann, erfasst die Lage des Justageklotzes bzw. einer Kerbe desselben und damit die relative Lage der beiden Bauteile zueinander.

Aus der WO 00/41852 A1 ist ein Verfahren zum Kalibrieren eines Roboters bekannt, bei dem ein Sensor, der an einem ersten Bauteil befestigt ist, die Kanten einer Nut detektiert, die in ein zweites Bauteil eingearbeitet ist, wobei die beiden Bauteile gegeneinander bewegbar sind.

Die EP 0 166 002 A1 offenbart ein Verfahren zum Justieren einer Achse eines Roboters mit einer Steuereinheit zum Ansteuern der Achse, über welche zumindest zwei Bauteile ausgehend von einer durch eine Urjustage bestimmten Justageposition gegeneinander bewegbar sind und die jeweils ein mechanisches Justagemerkmal aufweisen.

In den bekannten Vorrichtungen und Verfahren müssen daher die Sensoren und die von den Sensoren erfassten Elemente, also beispielsweise die Justageklötze, sehr präzise gesetzt werden, um die notwendige Präzision zu erreichen. Die Justage ist daher insbesondere mit einem hohen Zeitaufwand verbunden und erfordert kostenintensives Zubehör.

Der Erfindung liegt insbesondere die Aufgabe zugrunde, den für eine Justage wenigstens einer Achse eines Roboters notwendigen Zeit- und Kostenaufwand im Vergleich zu den bisher bekannten Lösungen zu reduzieren.

Zur Lösung dieser Aufgabe wird das Verfahren gemäß Patentanspruch 1 vorgeschlagen.

In bevorzugter Weise ist ein Wiederherstellen der Justageposition nach einem Justageverlust vorgesehen kann ferner ein Fehler in der Positionierung des Sensors weitgehend eliminiert werden. Durch die erfindungsgemäße Lösung kann zudem die Verwendung von mechanisch zu befestigenden Justagemitteln, wie beispielsweise elektronischen Messtastern, vermieden werden, so dass der Zeitaufwand für eine nachträgliche Justage deutlich reduziert werden kann.

Die Erfindung betrifft die Justage eines Roboters mit einem Gebersystem mit periodischem Ausgangssignal bzw. mit einem Resolver zum Erfassen einer Drehlage eines Antriebsmotors zum Antreiben der Achse. Solche Gebersysteme sind häufig nur innerhalb einer Umdrehung des Motors absolutgenau und bilden den Bereich der Drehlagen des Motors von 0° bis 360° auf 2ⁿ, beispielsweise auf 4096, diskrete Wert ab. Drehwinkel, die sich um ein ganzzahliges Vielfaches der Periode von 360° unterscheiden, sind daher anhand des Ausgangssignals des Gebersystems nicht unterscheidbar. Zum Bestimmen der absoluten Position des Roboters bzw. der Achse muss die Steuereinheit daher die Zahl der Umdrehungen bzw. Perioden oder Inkremente des Gebersystems ausgehend von der Urjustageposition speichern. Geht diese gespeicherte Justageinformation verloren, geht auch der Bezug zwischen der Mechanik und der Software verloren, so dass eine Justage gemäss dem erfindungsgemäßen Verfahren zwingend notwendig ist, um die Einsatzfähigkeit des Roboters wiederherzustellen.

Wenn nach dem Justageverlust der Wert der Resolverposition noch in der Steuerungssoftware vorhanden ist, was häufig der Fall ist, und sich an der Lage des Resolvers bzw. Gebersystems relativ zum Antriebsmotor nichts geändert hat, ist es nach Beseitigung des Hardware- oder Softwarefehlers, der zu dem Justageverlust geführt hat, ausreichend, in einem groben Justageschritt die Achse in eine Stellung in der Nähe der Urjustageposition zu bringen, die um weniger als eine halbe Periode des Gebersystems von der Urjustageposition abweicht. Die Urjustageposition kann dann wiederhergestellt werden, indem der Motor auf dem kürzesten Weg in die zur der Urjustageposition gespeicherten Motorstellung bzw. Resolverposition gedreht wird.

Ist die Justageinformation nicht mehr vorhanden, muss mit erhöhtem Aufwand die Urjustagestellung wieder gefunden werden. Dies kann beispielsweise auch im Herstellerbetrieb des Roboters erfolgen.

Im erfindungsgemäßen Verfahren wird daher vorgeschlagen, dass die Achsenposition in einem Wiederherstellungsjustageschritt abhängig von einer Differenz des Istwerts vom Sollwert verändert wird, bis die Differenz kleiner als ein Grenzwert ist. Durch die Aufteilung des Justagevorgangs in einen Justageschritt und einen Feinjustageschritt kann beispielsweise der unterschiedlichen Präzision des Sensors oder des menschlichen Auges und des Resolvers bzw. Gebersystems Rechnung getragen werden.

Wie bereits oben erörtert, sind durch das erfindungsgemäße Verfahren dann Vorteile erreichbar, wenn eine Drehlage eines Antriebsmotors einer Achse über einen Rotationsgeber mit periodischen Ausgangssignalen erfasst wird. Wenn der Grenzwert des Justageschritts einer Abweichung entspricht, die kleiner oder gleich dem Bewegungsweg der Achse ist, der durch eine Bewegung des Antriebsmotors um eine halbe Periode des Rotationsgebers bzw. Resolvers erzeugt wird, ist, wie oben beschrieben, in vielen Fällen der Wiederherstellungsjustageschritt zum Wiederherstellen der vollständigen Justageinformation bereits ausreichend.

Im Verfahren wird der Wiederherstellungsjustageschritt selbsttätig von der Steuereinheit ausgeführt.

Ein berührungsloser Sensor ist besonders vorteilhaft als optischer Sensor ausgebildet, und zwar insbesondere als Kamera, weil dadurch eine Vielzahl von Informationen, aus denen sich die Positionen der Merkmale ergeben können, simultan erfasst werden kann und zudem keine besonderen technischen Anforderungen an die Merkmale der Bauteile, die zur Justage verwendet werden, gestellt werden müssen. Die Merkmale müssen insbesondere nicht hochpräzise gefertigt sein.

In dieser Ausgestaltung der Erfindung kann die Kenngröße entweder eine aus dem von der Kamera während des Urjustagevorgangs und während des Wiederherstellungsjustagevorgangs aufgenommenen Bild berechnete Größe sein, oder aber das während des Urjustagevorgangs aufgenommene Bild selbst kann als Kenngröße gespeichert werden. Das gespeicherte Bild kann dann unmittelbar mit dem während des späteren Justagevorgangs aufgenommenen Bild verglichen werden oder aber aus den beiden Bildern können Kenngrößen berechnet werden, über welche die beiden Bilder mittelbar verglichen werden können.

In einer Weiterbildung des Verfahrens wird vorgeschlagen, dass der Istwert dadurch ermittelt wird, dass ein Bildverarbeitungsalgorithmus die Positionen des ersten und des zweiten Merkmals in einem Bild der Kamera erkennt und den Abstand zwischen den beiden Merkmalen bezogen auf wenigstens eine Achse bzw. Koordinate berechnet. Dadurch kann vorteilhaft auf bekannte Bildverarbeitungs- und Mustererkennungsalgorithmen zurückgegriffen werden und jedes beliebige, von dem Bildverarbeitungsalgorithmus einfach erkennbare Merkmal kann zum Ermitteln der Istposition verwendet werden.

Ferner wird vorgeschlagen, dass zum Bestimmen der Bewegungsbahn eines der Bauteile in der Bildebene der Kamera die Steuereinheit eines der Bauteile in mehrere Positionen bewegt und dass aus den Bildpositionen des Merkmals des bewegten Bauteils die Bewegungsbahn des bewegten Bauteils ermittelt wird. Dadurch kann in einfacher Weise ein Verkippen der Kamera und ein Winkel zwischen den Bildachsen der Kamera und der Bewegungsbahn des Bauteils erkannt und durch eine einfache Koordinatentransformation bzw. Bilddrehung eliminiert werden.

Ferner wird vorgeschlagen, dass wenigstens eines der Merkmale ein charakteristisches Merkmal eines Bauteils mit einer weiteren technischen Funktion ist. Als charakteristische Merkmale kommen insbesondere Kanten von Bauteilen und Ränder oder Ecken von farbigen Flächen in Betracht. Geeignete Bauteile mit einer weiteren technischen Funktion sind beispielsweise markante Gehäuseteile, die ohnehin im Guss vorhanden sind, und Schrauben.

Wenn zumindest eines der Merkmale einen maschinenlesbaren Code für die zu justierende Achse aufweist, kann während der Justage maschinell erkannt werden, welche der Achsen gerade justiert wird. In einer besonders vorteilhaften Ausgestaltung der Erfindung ist der Code durch den berührungslosen Sensor zum Erfassen der Merkmale, insbesondere durch eine Kamera, lesbar.

In einer Weiterbildung der Erfindung wird vorgeschlagen, dass zum Bestimmen der Position der Merkmale jeweils wenigstens ein Mittelwert aus den Positionen von mindestens zwei Untermerkmalen der Merkmale gebildet wird. Dadurch können Messfehler reduziert werden, und zwar insbesondere solche, die aus einer bezüglich der Bewegungsbahn schiefen Lage des Merkmals resultieren.

Weitere Vorteile ergeben sich aus der folgenden Beschreibung eines Ausführungsbeispiels. Die Beschreibung, die Ansprüche und die Figuren enthalten zahlreiche Merkmale in Kombination, die der Fachmann auch einzeln betrachten und zu sinnvollen weiteren Kombinationen zusammenfassen wird.

Dabei zeigen:
Fig. 1 : einen Roboter mit zwei als Marken ausgebildeten Merkmalen auf verschiedenen, auf einer Achse gegeneinander beweglichen Bauteilen,
Fig. 2 : eine der Marken aus Fig. 1,
Fig. 3 : einen Ausschnitt des Roboters mit den beiden Marken und einer Kamera mit Stativ,
Fig. 4 : den Ausschnitt des Roboters aus Fig. 3,
Fig. 5 : eine Ansicht des Ausschnitts aus Fig. 4 bei bezüglich der Achse gekippter Kamera und
Fig. 6 : eine Fig. 5 entsprechende Ansicht mit einer bezüglich der Achse schief angebrachten Marke.

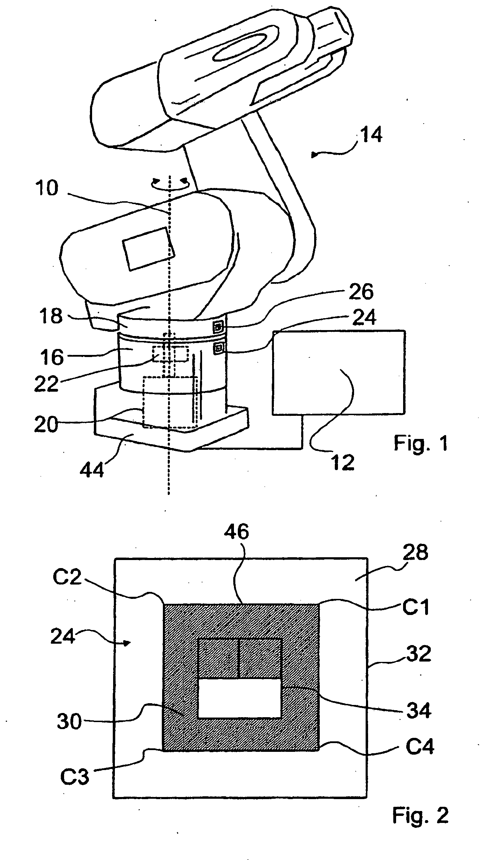

Figur 1 zeigt einen Roboter mit mehreren, jeweils durch einen Antriebsmotor 20 angetriebenen Achsen 10, die über eine hier nur schematisch dargestellte Steuereinheit 12 ansteuerbar sind. Der Roboter umfasst einen Roboterarm 14 und die Steuereinheit 12, die als externer Rechner ausgebildet ist. Der Roboterarm 14 besteht aus mehreren Bauteilen 16, 18 bzw. Baugruppen, die jeweils paarweise um eine Achse 10 gegeneinander verdrehbar bzw. bewegbar sind. Eine Stellung von Motorwellen der Antriebsmotoren 20 der Achsen 10 wird jeweils von einem Rotationsgeber 22 mit periodischem Ausgangssignal erfasst. Aus Gründen der Übersichtlichkeit ist hier nur eine Achse 10 mit einem Antriebsmotor 20 dargestellt.

Die Steuereinheit 12 führt über den Absolutwert der Stellungen der Achsen 10 Buch, indem sie bei Bewegungen der Antriebsmotoren 20 jeweils Inkremente oder Dekremente zu gespeicherten Werten addiert bzw. von diesen subtrahiert. Eine volle Drehung des Rotationsgebers 22 bzw. des Antriebsmotors 20 wird dabei auf 4096 Inkremente abgebildet und entspricht einer Drehung von höchstens einigen Grad auf der Achse 10, die am Außenumfang der beiden Bauteile 16,18 mit bloßem Auge gerade erkennbar ist.

An jeder der Achsen 10 ist an beiden Seiten neben einem Spalt zwischen zwei Bauteilen 16, 18, die über die jeweilige Achse 10 gegeneinander bewegbar sind, ein Paar von Marken angebracht, die Merkmale 24, 26 bilden, die im erfindungsgemäßen Verfahren zum Wiederherstellen der Justageposition nach einem Justageverlust genutzt werden.

Das erfindungsgemäße Verfahren wird im Folgenden anhand der Justage einer ersten Achse 10 beschrieben und ist analog auf die Justage der übrigen Achsen 10 anwendbar. Auch wenn der in Fig. 1 dargestellte Roboter ausschließlich rotatorische Achsen 10 hat, ist das erfindungsgemäße Verfahren ohne weiteres auf translatorische Achsen übertragbar. Das bezogen auf die Achse 10 untere Bauteil ist fest mit einem Sockel 44 des Roboters verbunden.

Fig. 2 zeigt die untere der beiden Marken der ersten Achse 10 aus Fig. 1 in einer Detailansicht. Die Marke ist quadratisch und zeigt einen schwarz-weißen, mittig innerhalb eines weißen Markenrands 28 angeordneten, quadratischen inneren Markenteil 30, dessen Seiten parallel zu einem Außenrand 32 der Marke verlaufen. Der innere Markenteil 30 umfasst einen schwarzen Rand und einen mittig angeordneten, quadratischen Codierungsteil 34, dessen Seiten parallel zu den Seiten des Außenrands 32 verlaufen.

Der innere Codierungsteil 34 ist in vier gleich große Quadrate aufgeteilt, die je nach Codierung entweder vollständig schwarz oder vollständig weiß sind. Im vorliegenden Ausführungsbeispiel sind die beiden oberen Quadrate schwarz, und die beiden unteren Quadrate sind weiß. Die Farben der vier Quadrate stellen einen Binärcode von 4 Bit dar, welcher verwendet werden kann, um die Achse 10 zu codieren bzw. zu bezeichnen, an welcher der Achsen 10 die Marke angeordnet ist.

Die vier Ecken C1 bis C4 des schwarz-weißen, inneren Markenteils 30 heben sich klar von dem weißen Markenrand 28 ab und sind dadurch in einem Bild einer Kamera mittels einer digitalen Bildverarbeitungssoftware klar lokalisierbar.

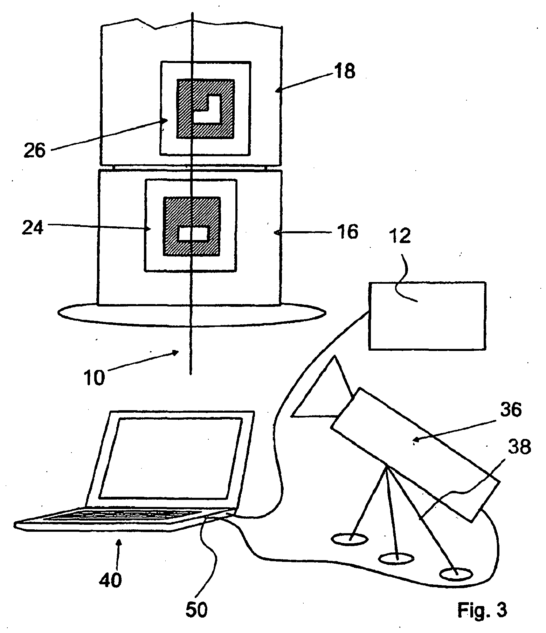

Fig. 3 zeigt einen Ausschnitt des Roboters mit den beiden um die erste Achse 10 gegeneinander verdrehbaren Bauteilen 16, 18 und den beiden jeweils an den Bauteilen 16, 18 angebrachten Marken sowie einen als Kamera 36 mit Stativ 38 ausgebildeten berührungslosen Sensor. Im Blickfeld der Kamera 37 sind die Marken angeordnet, so dass sie ungefähr in der Schärfeebene der Kamera 36 liegen und in der Ebene ihrer flächigen Ausdehnung parallel zu dieser Schärfeebene bzw. möglichst in der Schärfeebene verlaufen. Die Kamera 36 kann als Digitalkamera mit hoher Auflösung für Einzeibilder oder als Videokamera (normalerweise mit geringer Auflösung) ausgebildet sein. Bei einer Kantenlänge der Marke von 20 mm und einem Abstand der Kamera 36 von den Marken, der 17 cm beträgt, liegt die Auflösung der Kamera 36 vorteilhaft bei mehr als 2 Megapixel.

In alternativen Ausgestaltungen der Erfindung kann anstelle der Kamera 36 ein optischer Sensor, ein Lasertastgerät von der Art eines Barcodelesers oder ähnliches als der berührungslose Sensor zum Bestimmen der Position der Merkmale 24, 26 verwendet werden.

Ferner zeigt Fig.3 schematisch eine Signalverarbeitungseinheit 40 zum Justieren der ersten Achse 10 des Roboters, die eine Eingangsschnittstelle 50 hat, in welche das Ausgangssignal des als Kamera 36 ausgebildeten, berührungslosen Sensors eingespeist wird. Im vorliegenden Ausführungsbeispiel ist die Signalverarbeitungseinheit 40 ein Laptop-Computer.

In dem erfindungsgemäßen Verfahren ist die Signalverarbeitungseinheit 40 dazu vorgesehen, aus dem Ausgangssignal der Kamera 36 einen Istwert einer Kenngröße X für eine Relativposition der zumindest zwei gegeneinander beweglichen Bauteile 16, 18 aus einer Position der beiden Marken bzw. der beiden Merkmale 24, 26 der Bauteile 16, 18 zu bestimmen und zum Wiederherstellen der Justageposition den derart bestimmten Istwert der Kenngröße X mit einem gespeicherten, der Justageposition zugeordneten Sollwert zu vergleichen.

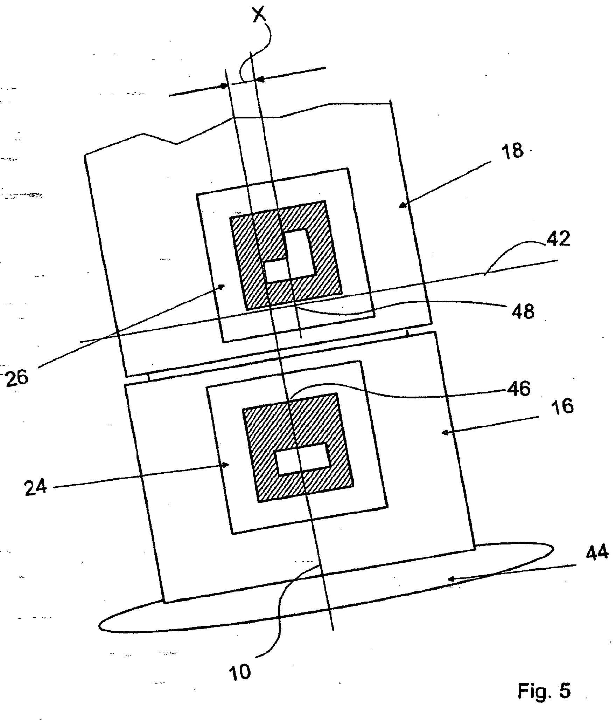

Der Sollwert wird in einem Urjustagevorgang ermittelt und in einer Speichereinheit der Signalverarbeitungseinheit 40 oder der Steuereinheit 12 des Roboters gespeichert. Sowohl in einer Urjustage als auch in einer Wiederherstellungsjustage wird in einem ersten Verfahrensschritt, der in Fig. 5 illustriert ist, eine Bewegungsbahn 42 der oberen, bezüglich der Kamera 36 beweglichen Marke in einer Bildebene der Kamera 36 ermittelt.

Dazu verfährt die Steuereinheit 12 bzw. die Signalverarbeitungseinheit 40 das obere Bauteil 16, 18 in mehrere Positionen und bestimmt in jeder Position den Mittelpunkt 48 zwischen den unteren Eckpunkten des inneren Bereichs der des Merkmals 26 am oberen Bauteil 18 bzw. deren Bildkoordinaten. Das untere Bauteil 16 bleibt dabei fest.

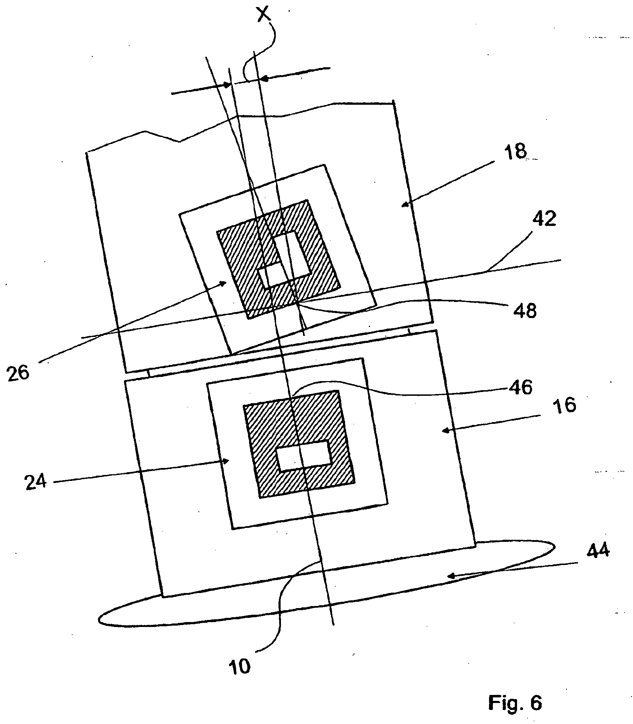

Die Ecken bilden daher Untermerkmale der Merkmale 24, 26, deren Position jeweils bestimmt und bei dem Berechnen der Mittelpunkte 46, 48 gemittelt wird. Durch den Mittelungsvorgang wird das Verfahren unempfindlich gegenüber einer schiefen Lage der Merkmale 24, 26 bezüglich der Achse 10, wie sie in Figur 6 dargestellt ist.

Aus den ermittelten Bildkoordinaten des Merkmals 26 in den verschiedenen Positionen, die mit den entsprechenden Koordinaten des Mittelpunkts 48 identifiziert werden, berechnet die Steuereinheit 12 bzw. die Signalverarbeitungseinheit 40 die Bewegungsbahn 42 der beweglichen Marke bzw. des beweglichen Merkmals 26 und insbesondere den Winkel zwischen dieser Bewegungsbahn 42 und der X-Achse 10 des Bilds der Kamera 36. Im einfachsten Fall erfolgt die Berechnung der Bewegungsbahn 42 durch das Verbinden zweier, aus zwei in verschiedenen Positionen aufgenommenen Bildern berechneter Punkte durch eine Gerade. Alternativ können in mehreren Kalibrationsfahrten verschiedene Kalibrationswinkel berechnet werden, die dann gemittelt werden, oder die Bewegungsbahn 42 des Merkmals 26 bzw. der Marke kann durch ein lineares Regressionsverfahren aus mehreren, beispielsweise 10 Bildpunkten berechnet werden.

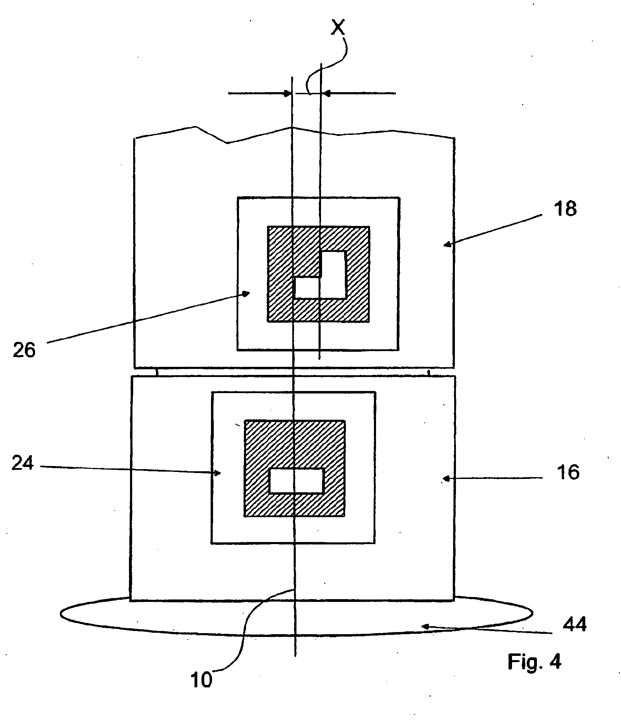

Zum Durchführen der Urjustage wird der Roboter in eine präzise definierte Justageposition gebracht, in der beispielsweise mehrere Bauteile fluchten oder einen anschaulichen Winkel, beispielsweise von 90°, zueinander einnehmen. Bei der Urjustage wird der Roboter mittels bekannter Verfahren präzise auf die Justageposition eingestellt. Die Justageinformationen werden durch das einfache Aufnehmen eines Bilds durch die Kamera 36 gewonnen, welches um den zuvor bestimmten Kalibrationswinkel gedreht wird, um die Bewegungsbahn 42 des beweglichen Bauteils 18 parallel zu der Bildachse des aufgenommenen Bilds auszurichten. Es ergibt sich das in Fig. 4 dargestellte Kamerabild.

Anschließend bestimmt die Signalverarbeitungseinheit 40 mittels eines Bildverarbeitungsalgorithmus den Mittelpunkt 48 zwischen den beiden unteren Ecken der oberen Marke und den Mittelpunkt 46 zwischen den beiden oberen Ecken C1, C2 der unteren Marke. Die Mittelpunkte 46, 48 sind Kenngrößen für die Positionen der beiden Marken im gedrehten Bild der Kamera 36. Anschließend berechnet die Signalverarbeitungseinheit 40 einen Abstand der beiden Merkmale 24, 26 bzw. Marken bezogen auf die X-Achse 10, indem die X-Koordinaten der beiden Mittelpunkte 46, 48 im gedrehten Koordinatensystem voneinander subtrahiert werden. Das Ergebnis ist ein Abstand, der die Kenngröße X für die Relativposition der Merkmale 26, 28 ist.

Das Ergebnis wird als Sollwert gespeichert, wobei der Bildverarbeitungsalgorithmus den Abstand zwischen der Kamera 36 und den beiden Marken eliminiert, indem er die Größe der Marken und ihre Abweichung von der tatsächlichen, quadratischen Form im Bild bestimmt und daraus den Kippwinkel der Kamera 36 bezüglich der Achse 10 und den Abstand der Kamera 36 von den Marken ermittelt und bei der Berechnung des Abstands berücksichtigt. Um die Genauigkeit der Urjustage zu verbessern, kann der Abstand mehrmals in unabhängigen Messvorgängen bestimmt werden, und die Ergebnisse können gemittelt werden.

Der im Urjustageverfahren ermittelte Sollwert des Abstands oder das gesamte, verzerrungskorrigierte Bild werden in einer Speichereinheit der Steuereinheit 12 bzw. der Signalverarbeitungseinheit 40 gespeichert, so dass sie bei einer Wiederherstellungsjustage abrufbar sind.

Wenn die Justageinformation durch eine Softwarestörung oder durch eine Hardwarestörung verloren gegangen ist, kann sie durch das erfindungsgemäße Verfahren einfach wiederhergestellt werden. Dazu wird, wie bei der Urjustage, die Kamera 36 auf die beiden der justierenden Achse 10 zugeordneten Marken gerichtet, analog zu dem oben beschriebenen Urjustageverfahren die Bewegungsbahn 42 des beweglichen Bauteils 16, 18 ermittelt, und der Kalibrationswinkel, um den die Bewegungsbahn 42 von der X-Achse 10 der Kamera 36 abweicht, wird berechnet. Anschließend wird mit der Kamera 36 ein Bild der beiden Marken aufgenommen, um den Kalibrationswinkel gedreht, und es wird, wie im Urjustageverfahren, ein auf die X-Achse 10 bezogener Abstand zwischen dem Mittelpunkt 48 der beiden unteren Ecken der oberen Marke und dem Mittelpunkt 46 der beiden oberen Ecken C1, C2 der unteren Marke berechnet. Bei der Berechnung des Abstands wird die Bildverzerrung berücksichtig und herausgerechnet, so dass der berechnete Istwert des Abstands, der eine Kenngröße X für die Relativposition der beiden Marken ist, direkt mit dem gespeicherten, im Urjustageverfahren ermittelten Sollwert verglichen werden kann.

Die Signalverarbeitungseinheit 40 führt diesen Vergleich durch eine Subtraktion des Istwerts vom Sollwert durch und verfährt die zu justierende Achse 10 solange in einer durch das Vorzeichen der ermittelten Differenz bestimmte Richtung, bis die Differenz wischen Istwert und Sollwert einen gespeicherten Grenzwert unterschreitet.

Nach diesem Wiederherstellungsjustageschritt ist der verbleibende Abstand zwischen der Istposition der Achse 10 und der Justageposition so klein, dass die Achse 10 durch weniger als eine halbe Drehung des Antriebsmotors 20 bzw. des Resolvers in die Justageposition gefahren werden kann. Wenn der der Justageposition zugeordnete Wert des Rotationsgebers 22 bzw. Resolvers noch in der Speichereinheit vorhanden ist, ist nun die Absolutposition der Achse 10 eindeutig bestimmt, und die notwenigen Justageinformationen sind wiederhergestellt.

Um zu gewährleisten, dass die in dem oben beschriebenen Wiederherstellungsjustageschritt eingestellte Position um weniger als eine halbe Drehung des Rotationsgebers 22 von der Justageposition abweicht, muss die Genauigkeit des berührungslosen Sensors bzw. die Auflösung der Kamera 36 so groß sein, dass die sich aus dem Fehler in der Bestimmung des Sollwerts, dem Grenzwert und dem Fehler in der Bestimmung des Istwerts zusammensetzende maximale Abweichung der tatsächlichen Position der Achse 10 von der tatsächlichen Urjustageposition kleiner als eine halbe Umdrehung des Rotationsgebers 22 ist.

Die Steuereinheit 12 bzw. die Signalverarbeitungseinheit 40, die zur Justage verwendet wird, kann in eine vorhandene Steuereinheit 12 des Roboters integriert sein oder beispielsweise auf einem tragbaren Computer bzw. einem Laptop installiert sein, wobei dann die ermittelten Justagewerte per kabel oder per Funk an die Steuerung des Computers übermittelt werden können. eine solche externe Signalverarbeitungseinheit 40 kann den Sollwert bzw. die Urjustageposition aus einer Speichereinheit der Steuereinheit 12 auslesen, oder der Vergleich zwischen dem Istwert und dem Sollwert kann nach einer Übertragung des übermittelten Istwerts in der Steuereinheit 12 erfolgen, wobei diese im Fall einer zu großen, den Grenzwert übertreffenden Abweichung zwischen dem Istwert und dem Sollwert ein Signal zur Wiederholung der Messung gibt.

Die Übertragung der Justagewerte von dem tragbaren Computer an die Steuerung kann manuell, per Kabel oder drhtlos erfolgen. Das Verstellen der Asche 10 bis zum Unterchreiten des Grenzwerts kann entweder unmittelbar durch die Steuerung des Roboters, durch den tragbaren Rechner unabhängig von der Steuerung des Roboters erfolgen.

### Bezugszeichenliste

- 10: Achse
- 12: Steuereinheit
- 14: Roboterarm
- 16: Bauteil
- 18: Bauteil
- 20: Antriebsmotor
- 22: Rotationsgeber
- 24: Merkmal
- 26: Merkmal
- 28: Markenrand
- 30: Markenteil
- 32: Außenrand
- 34: Codierungsteil
- 36: Kamera
- 38: Stativ
- 40: Signalverarbeitungseinheit
- 42: Bewegungsbahn
- 44: Sockel
- 46: Mittelpunkt
- 48: Mittelpunkt
- 50: Eingangsschnittstelle
- C1: Ecke
- C2: Ecke
- C3: Ecke
- C4: Ecke

## Patentansprüche

1. Verfahren zum Justieren wenigstens einer Achse (10) eines Roboters mit einer Steuereinheit (12) zum Ansteuern der Achse (10), über welche zumindest zwei Bauteile (16, 18) ausgehend von einer durch eine Urjustage bestimmten Justageposition gegeneinander bewegbar sind, wobei die zumindest zwei Bauteile (16, 18) jeweils wenigstens ein Merkmal (24, 26) aufweisen, **dadurch gekennzeichnet, dass** die Positionen der Merkmale (24, 26) von einem berührungslos erfassenden Sensor erfasst werden, ein Istwert einer Kenngröße (X) einer Relativposition der zumindest zwei gegeneinander beweglichen Bauteile (16, 18) aus der Position des Merkmals (24) an dem ersten Bauteil (16) und der Position des Merkmals (26) an dem zweiten Bauteil (18) bestimmt wird und zum Wiederherstellen der Justageposition der derart bestimmte Istwert mit einem durch die Urjustage bestimmten gespeicherten, der Justageposition zugeordneten Sollwert der Kenngröße (X) verglichen wird und die Achsenposition in einem von der Steuereinheit (12) selbsttätig ausgeführten Justageschritt abhängig von einer Differenz des Istwerts vom Sollwert verändert wird, bis die Differenz kleiner als ein Grenzwert ist, wobei über einen Rotationsgeber (22) mit periodischem Ausgangssignal eine Drehlage eines Antriebsmotors (20) der Achse (10) erfasst wird und wobei der Grenzwert einer Abweichung entspricht, die kleiner oder gleich dem Bewegungsweg der Achse (10) ist, der durch eine Bewegung des Antriebsmotors (20) um eine halbe Periode des Rotationsgebers (22) erzeugt wird.

2. Verfahren nach einem der vorhergehenden Ansprüche, **dadurch gekennzeichnet, dass** der berührungslose Sensor als optischer Sensor ausgebildet ist.

3. Verfahren nach Anspruch 2, **dadurch gekennzeichnet, dass** der berührungslose Sensor als Kamera (36) ausgebildet ist.

4. Verfahren nach Anspruch 3, **dadurch gekennzeichnet, dass** der Istwert dadurch ermittelt wird, dass ein Bildverarbeitungsalgorithmus die Positionen des ersten und des zweiten Merkmals (24, 26) in einem Bild der Kamera (36) erkennt und den Abstand zwischen den beiden Merkmalen (24, 26) bezogen auf wenigstens eine Achse (10) berechnet.

5. Verfahren nach Anspruch 4, **dadurch gekennzeichnet, dass** zum Bestimmen einer Bewegungsbahn (42) eines der Bauteile (18) in einer Bildebene der Kamera (36) die Steuereinheit (12) das Bauteil (18) in mehrere Positionen bewegt und aus den Bildpositionen des Merkmals (26) des bewegten Bauteils (18) die Bewegungsbahn (42) des bewegten Bauteils (18) ermittelt wird.

6. Verfahren nach einem der vorhergehenden Ansprüche, **dadurch gekennzeichnet, dass** wenigstens eines der Merkmale ein charakteristisches Merkmal eines Bauteils mit einer weiteren technischen Funktion ist.

7. Verfahren nach einem der vorhergehenden Ansprüche, **dadurch gekennzeichnet, dass** zumindest eines der Merkmale (24, 26) einen maschinenlesbaren Code für die zu justierende Achse (10) aufweist.

8. Verfahren nach einem der vorhergehenden Ansprüche, **dadurch gekennzeichnet, dass** zum Bestimmen der Position der Merkmale (24, 26) jeweils ein Mittelwert aus den Positionen von zumindest zwei Untermerkmalen der Merkmale (24, 26) gebildet wird.

9. Verfahren nach einem der vorhergehenden Ansprüche, **gekennzeichnet durch** ein Wiederherstellen der Justageposition nach einem Justageverlust.

## Claims

1. Method for adjusting at least one axis (10) of a robot comprising a control unit (12) for controlling the axis (10), by means of which at least two components (16, 18) can be moved relative to one another from an adjustment position defined by an original adjustment, wherein the at least two components (16, 18) comprise respectively at least one marker (24, 26), **characterised in that** the positions of the markers (24, 26) are determined by a non-contact detecting sensor, an actual value of a parameter (X) of a relative position of the at least two mutually movable components (16, 18) is determined from the position of the marker (24) on the first component (16) and the position of marker (26) on the second component (18) and to restore the adjustment position the thus determined actual value is compared with a saved reference value of the parameter (X) assigned to the adjustment position defined by the original adjustment, and the axis position is changed in an adjustment step performed automatically by the control unit (12) which is dependent on a difference of the actual value from the reference value, until the difference is smaller than a limit value, wherein a rotational position of a drive motor (20) of the axis (10) is determined by means of a rotation sensor (22) with a periodic output signal and wherein the limit value corresponds to a deviation, which is smaller than or equal to the movement path of the axis (10) produced by a movement of the drive motor (20) by a half period of the rotation sensor (22).

2. Method according to any of the preceding claims, **characterised in that** the non-contact sensor is in the form of an optical sensor.

3. Method according to claim 2, **characterised in that** the non-contact sensor is in the form of a camera (36).

4. Method according to claim 3, **characterised in that** the actual value is determined **in that** an image processing algorithm identifies the positions of the first and the second marker (24, 26) in an image of the camera (36) and calculates the distance between the two markers (24, 26) in relation to at least one axis (10).

5. Method according to claim 4, **characterised in that** to determine a movement path (42) of one of the components (18) in an image plane of the camera (36) the control unit (12) moves the component (18) into several positions and the movement path (42) of the moved component (18) is determined from the image positions of the marker (26) of the moved component (18).

6. Method according to any of the preceding claims, **characterised in that** at least one of the markers is a characteristic marker of a component with an additional technical function.

7. Method according to any of the preceding claims, **characterised in that** at least one of the markers (24, 26) comprises a machine-readable code for the axis (10) to be adjusted.

8. Method according to any of the preceding claims, **characterised in that** to determine the positon of the markers (24, 26) an average value is formed from the positions of at least two submarkers of the markers (24, 26).

9. Method according to any of the preceding claims, **characterised by** restoring the adjustment position after a misalignment.

## Revendications

1. Procédé pour ajuster au moins un axe (10) d'un robot avec une unité de commande (12) pour piloter l'axe (10) par l'intermédiaire duquel au moins deux composants (16, 18) peuvent être déplacés l'un contre l'autre à partir d'une position d'ajustage déterminée par un ajustage initial, lesdits au moins deux composants (16, 18) présentant chacun au moins une caractéristique (24, 26), **caractérisé en ce que** les positions des caractéristiques (24, 26) sont détectées par un capteur à détection sans contact, une valeur réelle d'une grandeur caractéristique (X) d'une position relative desdits au moins deux composants (16, 18) mobiles l'un contre l'autre est déterminée à partir de la position de la caractéristique (24) sur le premier composant (16) et de la position de la caractéristique (26) sur le deuxième composant (18) et, pour rétablir la position d'ajustage de la valeur réelle ainsi déterminée, est comparée à une valeur de consigne déterminée par l'ajustage initial, mémorisée et associée à la position d'ajustage, de la grandeur caractéristique (X), et la position de l'axe est modifiée dans une étape d'ajustage effectuée automatiquement par l'unité de commande (12) en fonction d'une différence entre la valeur réelle et la valeur de consigne jusqu'à ce que la différence soit inférieure à une valeur limite, une position de rotation d'un moteur d'entraînement (20) de l'axe (10) est détectée par l'intermédiaire d'un détecteur de rotation (22) avec signal de sortie périodique et la valeur limite correspondant à une dérivation qui est inférieure ou égale à la course de déplacement de l'axe (10) qui est engendrée par un déplacement du moteur d'entraînement (20) d'une demi-période du détecteur de rotation (22).

2. Procédé selon l'une quelconque des revendications précédentes, **caractérisé en ce que** le capteur sans contact est réalisé sous forme de capteur optique.

3. Procédé selon la revendication 2, **caractérisé en ce que** le capteur sans contact est réalisé sous forme de caméra (36).

4. Procédé selon la revendication 3, **caractérisé en ce que** la valeur réelle est déterminée par le fait qu'un algorithme de traitement d'image reconnaît les positions des première et deuxième caractéristiques (24, 26) dans une image de la caméra (36) et calcule la distance entre les deux caractéristiques (24, 26) par rapport à au moins un axe (10).

5. Procédé selon la revendication 4, **caractérisé en ce que** pour déterminer une trajectoire (42) d'un des composants (18) dans un plan d'image de la caméra (36), l'unité de commande (12) déplace le composant (18) dans plusieurs positions et détermine la trajectoire (42) du composant (18) déplacé à partir des positions d'image de la caractéristique (26) du composant (18) déplacé.

6. Procédé selon l'une quelconque des revendications précédentes, **caractérisé en ce qu'**au moins une des caractéristiques est une caractéristique spécifique d'un composant avec une autre fonction technique.

7. Procédé selon l'une quelconque des revendications précédentes, **caractérisé en ce qu'**au moins une des caractéristiques (24, 26) présente un code lisible par machine pour l'axe (10) à ajuster.

8. Procédé selon l'une quelconque des revendications précédentes, **caractérisé en ce que** pour déterminer la position des caractéristiques (24, 26), une valeur moyenne respective est formée à partir des positions d'au moins deux sous-caractéristiques des caractéristiques (24, 26).

9. Procédé selon l'une quelconque des revendications précédentes, **caractérisé par** une reconstitution de la position d'ajustage après une perte d'ajustage.
